# EUROPÄISCHE PATENTANMELDUNG

(11) **EP 1 661 450 A1**
(43) Veröffentlichungstag der Anmeldung: **31.05.2006**
(21) Anmeldenummer: 05023568.8
(22) Anmeldetag: 27.10.2005
(51) Int. Cl.: A01G 3/08, A01G 3/06

(54) **Handschere**

(30) Priorität: 26.11.2004 AT 19942004; 24.03.2005 AT 5142005
(71) Anmelder: Lesslhumer, Josef, 4600 Wels (AT)
(72) Erfinder: Lesslhumer, Josef, 4600 Wels (AT)
(74) Vertreter: Zinnecker, Armin

(57) **Zusammenfassung**

Eine mit Handkraft betätigbare Schere für die Baumpflege umfaßt einen Stiel (115) oder Teleskopstiel (1), eine Schneidbacke (117) und ein darauf gelagertes Schneidmesser (118). Die Schneidbacke (117) läuft in einem Schaft (20) aus, der in Richtung des Stiels (115) bzw. Teleskopstiels (1) verschieblich geführt ist. Das Schneidmesser (118) wird mittels eines Doppelhebels (220) und damit gelenkig verbundener Stangen (125,126) durch Drücken mit dem Stiel (115) bzw. Teleskopstiel (1) gegen die Schneidbacke (117) dieser zugestellt. Um eine derartige Schere zu verbessern ist am handhabbaren Ende des Stiels (115) bzw. Teleskopstiels (1) ein mit Druckluft befüllbarer Zylinder (3) mit einem darin verschiebbaren Kolben (4) angebracht, dessen Kolbenstange (5) mit dem Schaft verbunden ist.

## Beschreibung

Die Erfindung betrifft eine mit Handkraft betätigbare Schere für die Baumpflege, die durch Drücken am Stiel geschlossen wird. Insbesondere kann die Schere mit zwei Händen gehandhabt werden.

Die Schere umfaßt einen Stiel oder Teleskopstiel, eine Schneidbacke und ein Schneidmesser. Die Schneidbacke läuft in einem Schaft aus, der in Richtung des Stiels bzw. Teleskopstiels verschieblich geführt ist. Das Schneidmesser ist auf der Schneidbacke gelagert, nämlich schwenkbar gelagert. Es wird mittels eines Doppelhebels und damit gelenkig verbundener Stangen durch Drücken mit dem Stiel bzw. Teleskopstiel gegen die Schneidbacke dieser zugestellt.

Derartige Scheren werden zur Pflege von Gärten und Obstkulturen und zum Aufziehen junger Laubwälder eingesetzt, wobei im allgemeinen verschieden starke Äste und Zweige abzutrennen sind. Auf Druck sich schließende Scheren sind auch bei dichtem Astbestand gut anlegbar.

Ausgehend von der Funktion der Schere macht es einen Unterschied, ob ein Ast am Baumstamm oder an einem dicken Ast abgetrennt wird, wobei entsprechender Druck gegen den abzutrennenden Ast ausgeübt werden kann, oder ob ein Zweig oder dünner Ast eingekürzt werden soll, der dem Druck ausweichen würde. Um allen Anforderungen zu entsprechen muß die Schere sowohl auf Druck als auch ohne diese Druckausübung schließbar sein. Insbesondere bei der Pflege junger Laubbäume sind Äste unterschiedlicher Stärke abzunehmen. Auch die Anzahl der zu entfernenden Äste ist üblicherweise erheblich. Sie reicht bis zu dreißig Stück pro Baum, wobei bis zu einem Drittel stärkere Äste bis 35 mm Durchmesser vorhanden sein können. Bei der Bearbeitung eines Waldstückes bedeutet dies eine erhebliche Belastung für den Waldpfleger.

Aufgabe der Erfindung ist es, die auf Druck schließende Schere der eingangs angegebenen Art so zu verbessern, daß stärkere Äste in längerer Folge ohne Kraftanstrengung abgetrennt werden können, wobei die Schere ohne Umrüstung jederzeit auch mit Handkraft bedienbar ist.

Erfindungsgemäß wird diese Aufgabe durch die Merkmale des Anspruchs 1 gelöst. Am handhabbaren Ende des Stiels bzw. Teleskopstiels ist ein mit Druckluft befüllbarer Zylinder mit einem darin verschiebbaren Kolben angebracht, dessen Kolbenstange mit dem Schaft verbunden ist. Auf diese Weise ist der Schaft und mit ihm das Schneidmesser durch Druckluft betätigbar.

Vorteilhafte Weiterbildungen sind in den Unteransprüchen beschrieben.

Der Schaft kann an zwei Seiten in frei drehbaren Rollen geführt sein.

Vorteilhaft ist es, wenn die Füllung des Zylinders mittels eines Steuerventils bestimmbar ist.

Die Kolbenstange ist vorzugsweise durch ein Drahtseil mit dem Schaft kraftschlüssig verbunden.

Eine weitere vorteilhafte Weiterbildung ist dadurch gekennzeichnet, daß das Steuerventil zur wahlweisen Druckluftzuführung an den Zylinder außermittig am Boden des Zylinders untergebracht ist.

Nach einer weiteren vorteilhaften Weiterbildung weist das Steuerventil zwei beabstandete Dichtflächen auf, die vom Ventilkörper wechselseitig dichtend beaufschlagt werden.

Die Rückstellung des Kolbens kann durch eine abgestützte und am Boden des Kolbens anliegende Druckfeder erfolgen.

Vorzugsweise besitzt das Drahtseil an beiden Enden eine fest aufgesetzte Öse.

Das Drahtseil ist vorzugsweise im Inneren des Stiels bzw. Teleskopstiels geführt.

Eine weitere vorteilhafte Weiterbildung ist dadurch gekennzeichnet, daß das Drahtseil zwischen den beiden endseitigen Ösen weitere fest aufgesetzte Ösen aufweist, deren Abstände mit den einstellbaren Teleskoplängen korrespondieren.

Vorteilhaft ist es, wenn die Druckluft zum fallweisen Betrieb der Schere einer vom Baumpfleger tragbaren Stahlflasche entnehmbar ist. Die Stahlflasche kann mit einem vorzugsweise kurzen Schlauch mit der Schere verbunden sein.

Vorteilhaft ist es, wenn die Druckluft in der Stahlflasche, die vorzugsweise hoch verdichtet ist, über ein Druckminderventil der Schere zuführbar ist. Das Druckminderventil reduziert den Druck vorzugsweise auf den Betriebsdruck der Schere.

Die Stahlflasche kann in einer am Rücken des Baumpflegers tragbaren Tasche eingebunden sein.

Vorteilhaft ist es, wenn dem Steuerventil ein Hebel zugeordnet ist, der sich in Längsrichtung des Zylinders erstreckt. Durch den Hebel ist das Steuerventil betätigbar.

Ein Ausführungsbeispiel der Erfindung wird nachstehend anhand der beigefügten Zeichnung im einzelnen erläutert. In der Zeichnung zeigt
- Fig. 1: eine Schere mit einem Teleskopstiel in einer Seitenansicht,
- Fig. 2: einen Ausschnitt des Scherkopfes in einer Draufsicht,

- Fig. 3: das Steuerventil in einer vergrößerten Schnittansicht,
- Fig. 4: den Zylinder und Kolben in einer Schnittansicht,
- Fig. 5: die Stirnseite des Zylinders mit der außermittigen Ventilanordnung,
- Fig. 6: den Scherkopf in einer vergrößerten Darstellung und
- Fig. 7: die Führung des Schaftes in einer Schnittansicht.

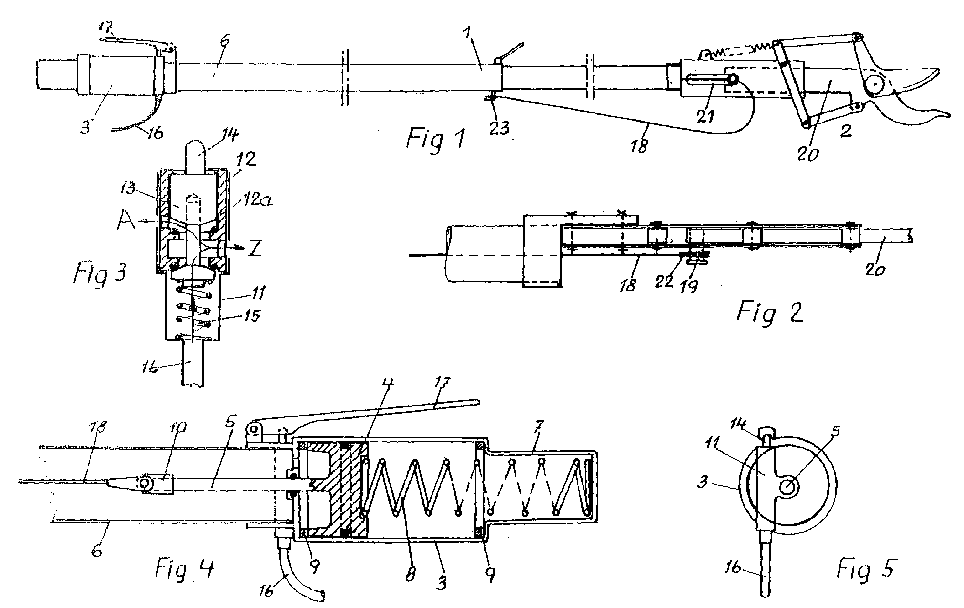

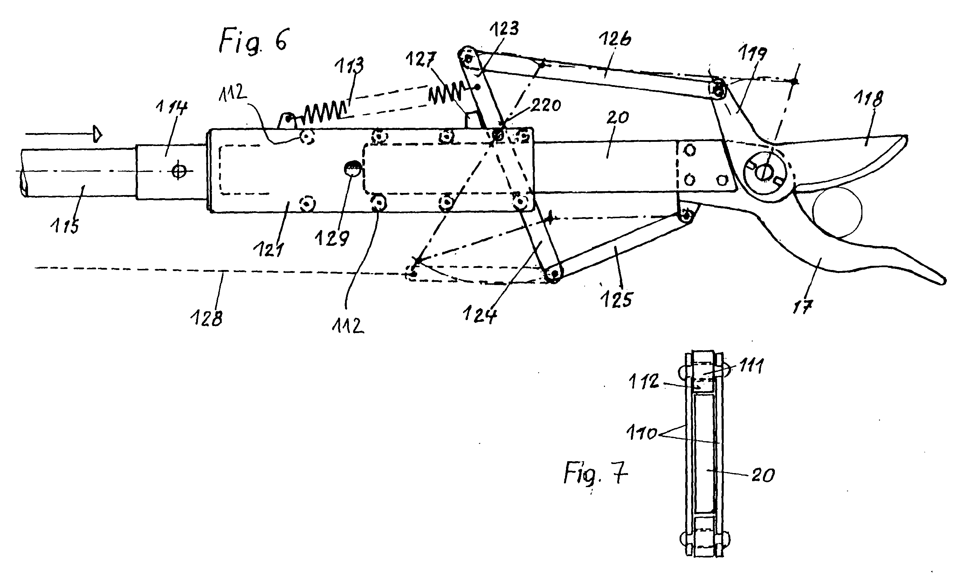

Auf einem Stiel 115 oder, wie in Fig. 1 dargestellt, auf einem Teleskopstiel 1 ist ein auf Druck ansprechender Scherkopf 2 aufgesetzt. Am handhabungsseitigen Ende des Stiels bzw. des Teleskopstiels ist ein Zylinder 3 mit einem darin verschiebbaren Kolben 4 angebracht.

Der schmale Scherkopf 2, der mit Druckhandhabung aktivierbar ist, ist in Fig. 6 vergrößert dargestellt. Er besteht aus einer Schneidbacke 117, auf der ein zustellbares Schneidmesser 118 mit einer als Hebel 119 dienenden Verlängerung schwenkbar gelagert ist. Eine als Schaft 20 ausgebildete Leichtmetallschiene ist am verbreiterten Fuß der Schneidbacke aufgenietet. Zwei parallele Stahlbänder 110, die beiderseits an den Rändern mit Abstandhaltern 111, auf welchen Rollen 112 gelagert sind, versehen sind, dienen als Führung 121 für den Schaft 20. Die Rollen 112 sind analog einer Rollenkette auf Distanzbüchsen frei drehbar gelagert. Die Stahlbänder 110 und die Rollen 112 sind derart beabstandet, daß der Schaft 20 mit leichtem Spiel darin gleitet. Der Schaft 20 aus Leichtmetall und die dünnen Stahlbänder 110 zielen darauf ab, den Scherkopf möglichst leicht zu machen, um die Schere bei ausgefahrenem Teleskopstiel 1 ohne Anstrengung aufrichten und handhaben zu können.

Die Schneidbacke 117 und das Schneidmesser 118 verlaufen in Richtung des Schaftes 20. Sie werden dem Ast von unten zugeführt, wodurch das Einfädeln auch bei dichtem Astbestand möglich ist. Zur Erleichterung des Einfädelns weist die Schneidbacke 117 einen erweiternden Fortsatz auf. Der Schaft 20 nimmt bei geöffneter Schere die in Fig. 6 gezeigte ausgefahrene Position ein.

An der Führung 121 ist ein Doppelhebel 220 gelagert. Der Doppelhebel 220 ist im vorderen Bereich der Führung 121, also an der der Schneidbacke 117 zugewandten Seite der Führung 121, seitlich an dieser gelagert. Ein Anschlag 127, an dem der Doppelhebel 220 anliegt, begrenzt die Öffnungsweite der Schere. Der lange Arm 124 des Doppelhebels 220 weist in Richtung der Schneidbacke 117. Der kurze Arm 123 weist in die entgegengesetzte Richtung. Eine knickfeste Leichtmetallstange 126 verbindet den kurzen Arm 123 des Doppelhebels 220 mit dem Hebel 119 des Schneidmessers 118. Eine weitere knickfeste Leichtmetallstange 125 verbindet den langen Arm 124 des Doppelhebels 220 mit der Schneidbacke 117. Die Armlängen des Doppelhebels 220 sind so bestimmt, daß der lange Arm 124 mindestens die doppelte Länge des kurzen Arms 123 aufweist. Je nach Öffnungsweite der Schere kann dieses Verhältnis gesteigert werden. Die damit erhöhte Scherkraft erlaubt im Umkehrschluß einen geringere Druckkraft zur Abnahme eines Astes. Durch Drücken des Stieles 115 gegen den Ast in Richtung des Pfeiles wird die Schere geschlossen.

Eine am kurzen Arm 123 und an der Führung 121 angebrachte Zugfeder 113 bewirkt die Offenstellung der Schere, wobei der an der Führung 121 vorhandene Anschlag 127 für den kurzen Arm 123 des Doppelhebels 220 diese Offenstellung begrenzt. Ein an der Führung 121 angesetzter Tubus 114 dient zur Aufnahme des Stiels 115. Als Stiel kann ein einfacher Holzstab dienen, oder eine Teleskopstange 1 mit Rastungen.

In der forstwirtschaftlichen Baumpflege werden Seitentriebe unmittelbar am Stamm oder an starken Ästen entfernt, also an Stellen, an denen dem Druck ein entsprechender Widerstand geboten ist. Bei der Kronenbildung in Obstgehölzen oder beim Auslichten von Gebüsch müssen dünne Äste bzw. Zweige geschnitten oder eingekürzt werden, die keinen Widerstand bieten. Um den Scherkopf 2 auch für diese Arbeiten einsetzen zu können, ist die Leichtmetallstange 125 an der Schneidbacke 117 lösbar angelenkt. Durch eine kleine Umrüstung wird die Leichtmetallstange 125 von der Schneidbacke 117 gelöst und umgeschwenkt. Sie wird in umgeschwenkter Stellung mit einer Zugleine 128 verbunden, wobei der Schaft 20 in der Führung 121 mit einem einrastenden Druckbolzen 129 arretiert wird. Durch einen Zug an der Zugleine 28 kann die Schere betätigt werden. Diese Ausführungsform hat den weiteren Vorzug, daß mit der Zugleine 128 auch die Armübersetzung der Arme 123, 124 des Doppelhebels 220 genutzt wird.

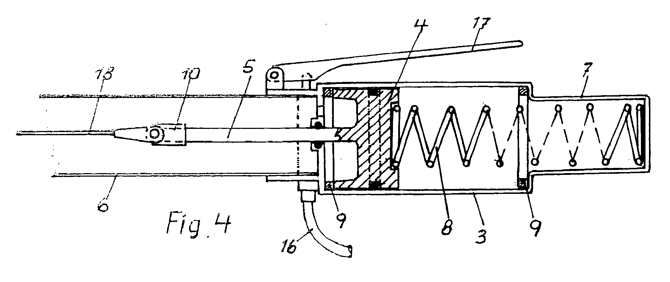

Wie aus Fig. 4 ersichtlich ist der Zylinder 3 mit dem Teleskoprohr 6 verschraubt. Die Kolbenstange 5 des in den Zylinder 3 verschiebbaren Kolbens 4 durchsetzt abgedichtet die Stirnwand des Zylinders 3. Eine am Boden des Kolbens 4 abgestützte Druckfeder 8 durchgreift den Zylinder 3 und eine abgesetzte Verlängerung 7 des Zylinders 3. Sie hält den Kolben 4 in seiner in Fig. 4 gezeigten Ausgangslage. An den Enden des Zylinders 3 sind Gummiringe 9 eingesetzt, die den Aufschlag des Kolbens 4 dämpfen. Am Ende der Kolbenstange 5 ist ein Nippel 10 mit Öse aufgesetzt, der zum Anschluß eines Drahtseils 18 dient.

Seitlich neben dem Durchbruch für die Kolbenstange 5 ist am Zylinder 3 ein Gehäuse 11 zur Aufnahme eines Steuerventils 12 untergebracht. Das Steuerventil 12 regelt den Zufluß und den Abfluß der Preßluft in den und aus dem Zylinder 3. Hierfür sind in dem Gehäuse 11 des Steuerventils 12 und in dem Ventilkörper 12a Bohrungen A und Z vorhanden, die für die Luftführung sorgen.

Das Steuerventil 12 besteht, wie aus Fig. 3 ersichtlich, aus einem Ventilkörper 12a, der zwei beabstandete Dichtflächen aufweist, und einem Ventil 13 mit einem Stift 14, der den Ventilkörper 12a übergreift. Eine im Gehäuse 11 abgestützte Druckfeder 15 hält das Ventil 12a in der in Fig. 3 gezeigten, geschlossenen Stellung, wobei die über einen Schlauch 16 zugeführte Preßluft diese Schließstellung unterstützt. In dieser Stellung ist der Weg von Z nach A offen. A führt ins Freie, und Z führt zum Zylinder 3 oberhalb des Kolbens 4. Im Zylinder 3 herrscht bei dieser Stellung normaler Luftdruck.

Durch Andrücken des Stiftes 14 gegen die Kraft der Druckfeder 15 wird der Luftaustritt bei A geschlossen und gleichzeitig zwangsweise der Zustrom der Preßluft aus dem Schlauch 16 zum Zylinder 3 durch die Öffnung Z geöffnet. Durch die Druckluft wird der Kolben 4 unter Spannung der Druckfeder 8 in die Endlage versetzt. Beim Lösen des Stiftes 14 wird der Zylinder 3 durch den dann geöffneten Weg von Z nach A entlüftet, so daß sich die in Fig. 3 und 4 gezeigte Ausgangsposition wieder einstellt. Der Kolben 4 gleitet durch den Druck der gespannten Druckfeder 8 in die Ausgangslage zurück, wobei die Luft bei A abströmen kann. Zur Steuerung der Preßluftzufuhr können auch andere Ventilformen, beispielsweise ein Drehkolbenventil, verwendet werden.

Das geringe Ausmaß des Zylinders 3 erlaubt es, diesen als Handgriff zu verwenden, wobei ein griffgünstig zugeordneter Hebel 17 zur wahlweisen Betätigung des Steuerventils 12 dient. Der Hebel 17 erstreckt sich parallel zum Zylinder 3.

Das Drahtseil 18, welches am Nippel 10 festgelegt ist, verläuft vorzugsweise im Inneren der Teleskoprohre 6 zum Scherkopf 2. Es ist an einem Bolzen 19 des Schaftes 20 eingehängt. Das der Teleskoprohrmitte zugekehrte Stahlband 110 der Schaftführung 121 weist einen dem Hub des Kolbens 4 entsprechenden Längsschlitz 21 auf, in dem der Bolzen 19 gleitet. Das Ende des Drahtseils 18 besitzt eine Öse 22, die in den Bolzen 19 eingehängt ist. Damit ist eine kraftschlüssige Verbindung zwischen dem Kolben 4 und dem Schaft 20 des Scherkopfes 2 hergestellt. Dem Baumpfleger ist es damit in die Hand gegeben, nach Bedarf mit Handdruck oder mit Preßluft die Astabnahme vorzunehmen.

Das erläuterte Drahtseil 18 bezieht sich auf eine Ausführungsform mit festem Stiel 115. Bei Verwendung eines Teleskopstieles 1, wie oben beschrieben, können beliebig viele Längen eingestellt werden. In der praktischen Anwendung wird man jedoch mit drei bis vier Längen auskommen. Im vorliegenden Fall wird das Teleskop mit einer kurzen, einer mittleren und einer langen Rastung ausgestaltet und dementsprechend das Drahtseil 18 mit den endseitigen Ösen auf die größte Länge abgestimmt. Für die kurze und mittlere Rastung sind weitere Ösen 22 mit dem Drahtseil 18 fest verbunden, wobei die Abstände mit den einstellbaren Längen korrespondieren. Bei kurzer oder mittlerer Längeneinstellung ergibt sich ein Drahtseilüberhang, der in einen Haken 23 am Teleskoprohr eingehängt wird.

Die Versorgung mit Preßluft kann von einem fahrbaren Aggregat erfolgen, das aus einem motorisch betriebenen Kompressor und einem Behälter für die Preßluft besteht. Beispielsweise kann ein derartiges Aggregat auf einem Traktor aufgesetzt sein. Vielfach werden Wälder in bergigem Gelände, welches landwirtschaftlich nicht nutzbar ist, angelegt. Ebenso bedecken Wälder weite Bereiche im Gebirge. Für diese zum größten Teil nur begehbaren Wälder kann der pneumatische Betrieb der Schere von einer mitgetragenen Preßluftflasche versorgt werden. Beispielsweise kann in einer Zehnliter-Stahlflasche bei entsprechend hoher Verdichtung eine große Preßluftmenge untergebracht werden. Bei einer gedrosselten Entnahme von sechs bis acht bar für den Betrieb der Schere resultieren daraus mehr als tausend Schnitte, was mindestens einer Tagesleistung entspricht, und dies umso mehr, als mit der Schere ein großer Teil der Schnitte mit Handkraft ausgeführt werden kann. Eine in eine rucksackähnliche Trage eingebundene Stahlflasche wiegt etwa 10 bis 11 kg und kann ohne Anstrengung mitgetragen werden. Der Baumpfleger kann sich damit in jedem Gelände frei bewegen und die Bäume von allen Seiten ungehindert bearbeiten.

## Patentansprüche

1. Mit Handkraft betätigbare Schere für die Baumpflege mit einem Stiel (115) oder Teleskopstiel (1), mit einer Schneidbacke (117), die in einem Schaft (20) ausläuft, der in Richtung des Stiels (115) bzw. Teleskopstiels (1) verschieblich geführt ist, und mit einem darauf gelagerten Schneidmesser (118), das mittels eines Doppelhebels (220) und damit gelenkig verbundener Stangen (125, 126) durch Drücken mit dem Stiel (115) bzw. Teleskopstiel (1) gegen die Schneidbacke (117) dieser zugestellt wird,
**dadurch gekennzeichnet,**
**daß** am handhabbaren Ende des Stiels (115) bzw. Teleskopstiels (1) ein mit Druckluft befüllbarer Zylinder (3) mit einem darin verschiebbaren Kolben (4) angebracht ist, dessen Kolbenstange (5) mit dem Schaft (20) verbunden ist.

2. Schere nach Anspruch 1, **dadurch gekennzeichnet, daß** der Schaft (20) an zwei Seiten in frei drehbaren Rollen (111) geführt ist.

3. Schere nach Anspruch 1 oder 2, **dadurch gekennzeichnet, daß** die Füllung des Zylinders (3) mittels eines Steuerventils (12) bestimmbar ist.

4. Schere nach einem der vorhergehenden Ansprüche, **dadurch gekennzeichnet, daß** die Kolbenstange (5) durch ein Drahtseil (18) mit dem Schaft (20) verbunden ist.

5. Schere nach Anspruch 3 oder 4, **dadurch gekennzeichnet, daß** das Steuerventil (12) zur wahlweisen Druckluftzuführung an den Zylinder (3) außermittig am Boden des Zylinders (3) untergebracht ist.

6. Schere nach einem der Ansprüche 3 bis 5, **dadurch gekennzeichnet, daß** das Steuerventil (12) zwei beabstandete Dichtflächen aufweist, die vom Ventilkörper (12a) wechselseitig dichtend beaufschlagt werden.

7. Schere nach einem der Ansprüche 3 bis 6, **dadurch gekennzeichnet, daß** die Rückstellung des Kolbens (4) durch eine abgestützte und am Boden des Kolbens (4) anliegende Druckfeder (8) erfolgt.

8. Schere nach einem der Ansprüche 4 bis 7, **dadurch gekennzeichnet, daß** das Drahtseil (18) an beiden Enden eine fest aufgesetzte Öse (22) besitzt.

9. Schere nach einem der Ansprüche 4 bis 8, **dadurch gekennzeichnet, daß** das Drahtseil (18) im Inneren des Stiels (115) bzw. Teleskopstiels (1) geführt ist.

10. Schere nach einem der Ansprüche 4 bis 9, **dadurch gekennzeichnet, daß** das Drahtseil (18) zwischen den beiden endseitigen Ösen (22) weitere fest aufgesetzte Ösen (22) aufweist, deren Abstände mit den einstellbaren Teleskoplängen korrespondieren.

11. Schere nach einem der vorhergehenden Ansprüche, **dadurch gekennzeichnet, daß** die Druckluft einer tragbaren Stahlflasche entnehmbar ist.

12. Schere nach Anspruch 11, **dadurch gekennzeichnet, daß** die Stahlflasche durch einen vorzugsweise kurzen Schlauch mit der Schere verbunden ist.

13. Schere nach Anspruch 11 oder 12, **dadurch gekennzeichnet, daß** die Druckluft in der Stahlflasche über ein Druckminderventil der Schere zuführbar ist.

14. Schere nach einem der Ansprüche 11 bis 13, **dadurch gekennzeichnet, daß** die Stahlflasche in einer am Rücken tragbaren Tasche eingebunden ist.

15. Schere nach einem der vorhergehenden Ansprüche, **dadurch gekennzeichnet, daß** dem Steuerventil (12) ein Hebel (17) zugeordnet ist, der sich in Längsrichtung des Zylinders (3) erstreckt.
